# EUROPEAN PATENT APPLICATION

(11) **EP 4 523 886 A1**
(43) Date of publication of application: **19.03.2025**
(21) Application number: 23386113.7
(22) Date of filing: 09.11.2023
(51) Int. Cl.: B29C 64/129, B29C 64/135, B29C 64/268, B29C 64/277, B29C 64/286, B33Y 30/00

(54) **3D PRINTING DEVICE COMBINING DIGITAL LIGHT PROJECTION AND TWO-PHOTON POLYMERIZATION**

(30) Priority: 12.09.2023 GR 20230100729
(71) Applicant: Foundation For Research And Technology Hellas, 70013 Heraklion, Crete (GR)
(72) Inventor: Farsari, Maria, 71500 Prassas (GR); Zyla, Gordon, 71306 Vrioulon 51 (GR)
(74) Representative: Vavekis, Konstantinos

(57) **Abstract**

A 3D printing device that combines one-photon printing by digital light projection (DLP) and two-photon polymerization (2PP) by means of a motorized nosepiece (4) with various microscope objectives (MO) with different numerical apertures capable of switching between said MOs, which allows for high-speed and high-resolution printing for large-area processing without limiting the 3D printing capabilities of 2PP (1).

## Description

### OBJECT OF THE INVENTION

The embodiments of the invention as illustrated and described herein relate to a 3D printing device that combines one-photon printing by digital light projection (DLP) and two-photon polymerization (2PP). This allows for high-speed and high-resolution printing for large-area processing without limiting the 3D printing capabilities of 2PP.

### BACKGROUND OF THE INVENTION

High-resolution 3D printing is achieved through two-photon polymerization (2PP), a technique that utilizes a nonlinear phenomenon induced by tightly focusing ultrashort pulsed laser radiation in photosensitive material.

While lasers with NIR (near infrared) wavelengths are commonly used for 2PP, lasers emitting ultrashort pulses at green wavelengths are also suitable. The laser radiation initiates the cross-linking of the polymer chains in a specific volume that is much smaller than the dimension of the laser focus. By guiding the laser beam through the material, 2PP allows for the printing of 2D, 2.5D, and even 3D structures using sliced computer models in most cases. This method enables the fabrication of structures with ultra-high-resolution features down to sub-100 nm without the need for a mask, vacuum, cleanroom facilities, or harsh chemicals.

However, the slow printing speed of 2PP hinders is widespread use due to its resolution and writing scheme. Typically, standard home-built optical setups for 2PP and commercially available 2PP systems are available in two different configurations. The first configuration allows for the printing of 3D structures by translating the photosensitive material with respect to the laser beam using a highly accurate 3D axis system. Sliced models can also be used in this first configuration. In the second configuration, computer models are sliced into various layers, and each layer is processed by scanning the laser beam into its specific geometry using a galvo scanning system. Although the galvo scanner configuration enables higher printing speeds than the axis configuration, printing an area of several mm² can take several hours, depending on the size and complexity of the 3D structure.

Despite this, diffractive optical elements (DOEs) or spatial light modulators (SLMs) have been successfully demonstrated to enhance the processing speed of 2PP in one of the configurations.

Another recently published option to enhance the fabrication speed of 2PP is the use of a digital mirror device (DMD), which enables spatiotemporal shaping of the laser radiation to print the entire layer geometry in a single exposure dose.

However, every reported optimization to increase the 2PP printing speed is combined with certain limitations. For example, using a DOE or SLM (selective laser melting) enables only the processing of periodic structures, and DMD (digital metal deposition) negatively affects the resolution.

### DESCRIPTION OF THE INVENTION

The present invention relates to a 3D printing device that combines one-photon printing by digital light projection (DLP) and two-photon polymerization (2PP), which allows for high-speed and high-resolution printing for large-area processing without limiting the 3D printing capabilities of 2PP.

The invention aims to advance two-photon polymerization (2PP) for large-area processes. 2PP allows for maskless 3D printing with ultra-high resolution down to the sub-100nm regime, making it an attractive option for manufacturing innovative applications in interdisciplinary fields that cannot be achieved by any other lithographic manufacturing technique.

Unlike other proposed solutions to enhance 2PP printing speed, the invention does not focus primarily on accelerating the 2PP process, but uses it specifically where needed. Therefore, the invention combines 2PP with a lower resolution but more efficient printing approach, with DLP. DLP is a printing technique that uses thousands of electronically switchable micro-mirrors (DMD, digital micromirror device) to enable high-efficient light shaping. By combining the advantages of 2PP and DLP, the invention enables high-speed and high-resolution printing.

Some applications that could benefit from this invention include Lab-on-Chip, Plant-on-Chip and Organ-on-Chip applications, as well as innovative real-world applications such as waveguides, microfluidic structures, tissue engineering scaffolds with superior mechanical properties, surfaces with bioinspired properties, free-form micro-optics, photonic integrated circuits, and 3D photonic metamaterials, among others. However, the present invention is not limited to a specific field.

The invention comprises a DLP source, a 2PP source, the necessary optics to guide the light emitted by the DLP and/or 2PP towards the sample, an imaging system and illumination system therefor, a motorized nosepiece with various microscope objectives (MO) with different numerical apertures capable of switching between these MOs, an XYZ-stage system, and a resin tank.

The present invention enables the use of 2PP in almost any configuration, allowing for the translation of samples with respect to printing arbitrary structures. However, the most convenient approach for the invention is 3D printing in a layer-by-layer manner using both DLP and 2PP. The sample is placed on a holder immersed in a tank filled with suitable resins for 3D printing approaches, using a high-precision Z-stage that also shifts the sample inside the photoresist tank after each layer has been printed.

Generally, DLP printing is used to fabricate bulky structures (e.g., >100µm) or less complex structures that do not require ultra-high resolution, and 2PP is used to manufacture ultra-fine structures. 2PP processing can be done in axis, galvo or DMD mode. Axis and galvo mode allow a full control of the 2PP resolution, meaning that they do not limit the 2PP resolution.

For both 2PP and DLP processing, various MOs with different numerical apertures can be selected, but for DLP, it is also possible to print without the use of an MO. In this context, DLP and 2PP can be used alternately, but both techniques can also be used simultaneously when printing is conducted with the same MO.

Switching between these MOs is possible by using the motorized nosepiece. Before switching to another MO, the Z-stage moves the sample placed on the holder vertically to a lower position to prevent the MO from being damaged when rotating using the motorized nosepiece. An XY-translation stage with high precision and long traveling distance can be used to enable stitching if necessary for large-area structures.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figures 1 and 2.- Show a schematical illustration of the use of 2PP and DLP in stage mode alternately.
Figures 3 and 4.- Show a schematical illustration of the use of 2PP and DLP in galvo mode alternately. In figure 3 the sample is illuminated from the bottom.
Figures 5 and 6.- Show a schematical illustration of the use of 2PP and DLP in DMD mode alternately.

### PREFERRED EMBODIMENT OF THE INVENTION

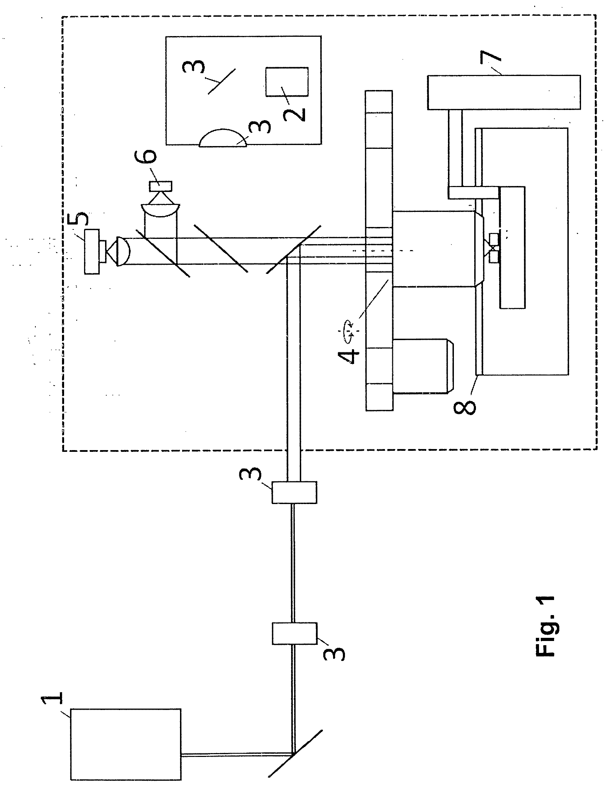

It is described below, with the help of figures 1 to 6, and exemplary embodiment of the 3D printing device combining digital light projection and two photon polymerization, object of the present invention, which can be used in several modes.

The printing device comprises a DLP (digital light projection) source (2), a 2PP (two-photon polymerization) source (1), both associated to guiding optics (3) to guide the light emitted by the DLP source (2) and/or 2PP source (1) towards a sample.

The device also comprises an imaging system (5), preferably a charge-coupled device (CCD) camera, directed towards the sample, and an LED light (6), that provides light to the sample.

Moreover, the device comprises a motorized nosepiece (4), placed between the guiding optics (3) and the sample, with various microscope objectives (MO) with different numerical apertures capable of switching between these MOs.

Finally, the device comprises an XYZ-stage module (7) and a resin tank (8), where the sample is intended to be placed on a sample holder in the resin tank (8). Everything except the 2PP source (1) is housed within a UV-protection housing, as can be seen in figures 1-6.

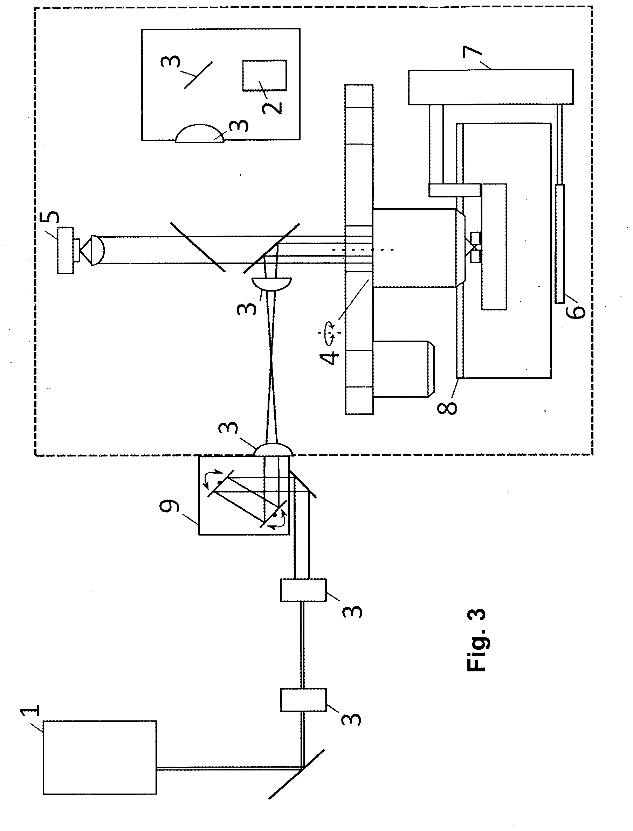

The CCD camera (5) is used to observe the printing process. The sample is illuminated from the top using the LED light (5). However, it is also possible to illuminate the sample from the bottom if the resin is optically clear and the tank (8) and the sample holder are manufactured using transparent materials,as can be seen in fig. 3.

The guiding optics (3) comprise a shutter, a beam expander and a varying number of lens depending on the mode, placed between the 2PP source (1) and the sample. Additionally, the guiding optics (3) comprise a digital mirror and a lens, placed between the DLP source (2) and the sample.

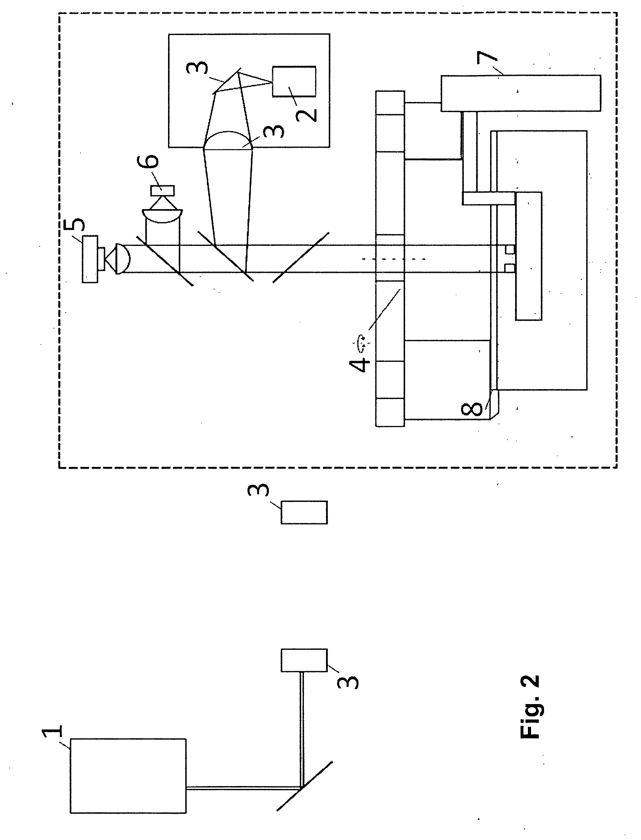

Figures 1 and 2 show the axis or stage mode. In this mode, while the DLP source (2) printing is performed in a layer-by-layer manner, the 2PP source (1) can either be performed in a layer-by-layer manner or the XYZ stage module (7) can be used to move the sample holder with respect to the 2PP source (1) as desired.

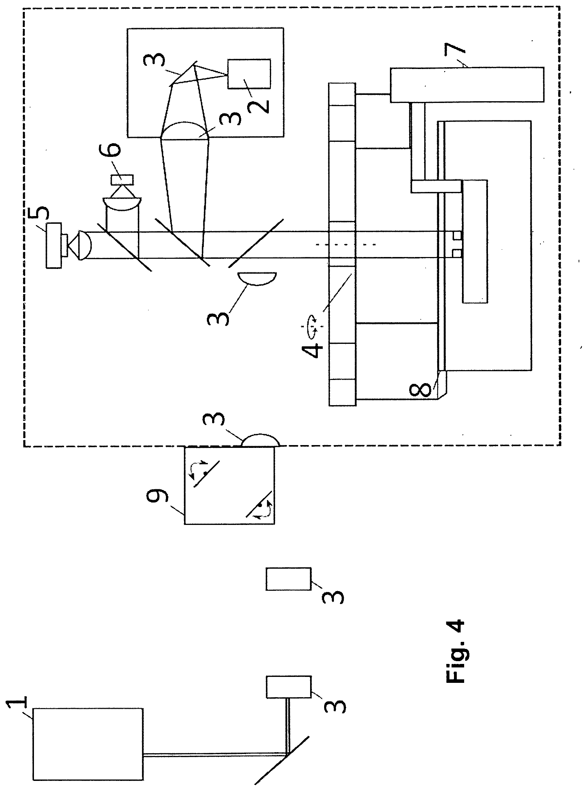

Figures 3 and 4 show the galvo mode. In this mode, all 3D printing is conducted in a layer-by-layer manner. While the DLP source (2) printing is performed by shaping the light in the geometry of each layer, the 2PP source (1) printing is performed by deflecting the laser beam in the geometry of the printed layer using galvometric mirrors (9).

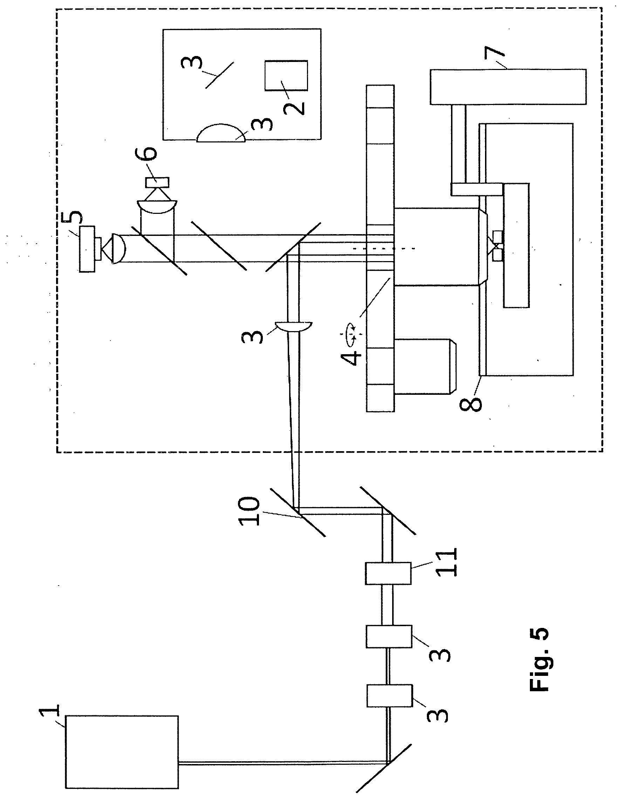

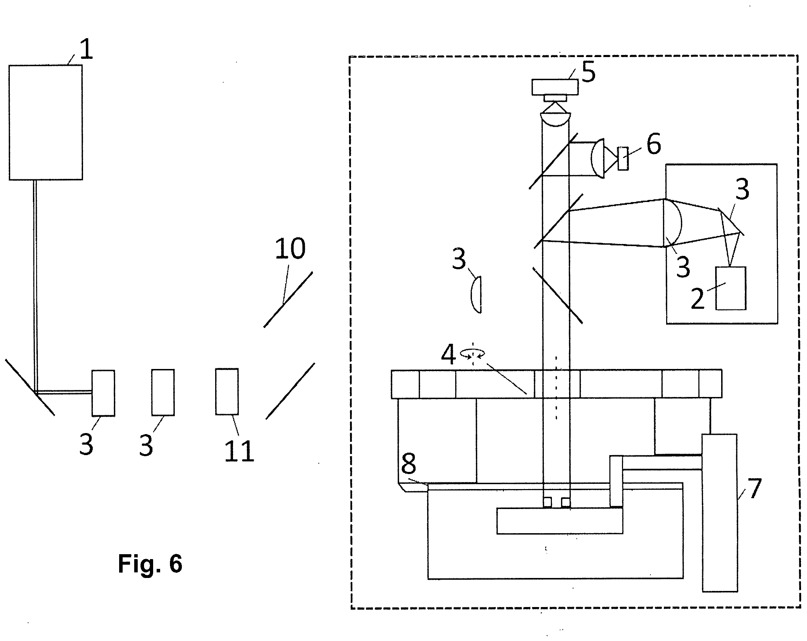

Figures 5 and 6 show the DMD (digital mirror device) mode. In this mode, all 3D printing is conducted in a layer-by-layer manner. Both the DLP source (2) and the 2PP source (1) printing are performed by projecting light shaped in the geometry of each layer onto the photoresist. The guiding optics (3) for this mode additionally comprise a digital mirror device (10) and a π shaper (11) placed between the 2PP source (1) and the motorized nosepiece (4).

All three modes allow for simultaneous application of both printing methods when all printing is conducted with the same microscope objectives.

For the 2PP source (1) printing, a computer model of the structures intended to be printed in STL format is sliced, and each layer is hatched using a standard commercially available slicer. Paths for slices and hatches are translated to, for example, G-code format that can be interpreted by stages or galvo scanners. Thus, the exposure of the photoresists is determined by the sliced and hatched paths and, for example, by the G-code commands.

For DLP source (2) printing and 2PP source (1) printing in DMD configuration, computer models of structures in STL format are sliced using a standard commercially available slicer, and sliced layers can be translated to images, for example, in bmp format. Thus, the exposure of the photoresists is determined by the sliced and hatched paths and, for example, by single bmp-files.

DLP source (2) and 2PP source (1) can also use grayscale control to set the intensity distribution of light/laser radiation within a single layer and to compensate for optical errors. The grayscale control can comprise stochastic optimization techniques augmented with advanced ML/AI algorithms. In the case of DLP source (2) printing, the DLP device enables control of the light power of every pixel. In the case of 2PP source (1) printing, the optical 2PP system requires an attenuator.

## Claims

1. A 3D printing device combining digital light projection (DLP) and two photon polymerization (2PP), being the device **characterized in that** it comprises:
- a 2PP source (1),
- a DLP source (2),
- a resin tank (8),
- a sample holder contained within the resin tank (8), intended to hold a sample,
- an XYZ-stage module (7) associated to the sample holder (9) in order to move it,
- a motorized nosepiece (4) with various microscope objectives with different numerical apertures capable of switching between them, placed between the 2PP source (1) and DLP source (2) and the sample holder (9),
- guiding optics (3) placed between the 2PP source (1) and the DLP source (2) and the motorized nosepiece (4), and
- an imaging module (5) and illumination module (6) associated to the sample holder.

2. The device according to claim 1, where the imaging module (5) is a charge-coupled device (CCD) camera.

3. The device of claim 1, wherein the illumination module (6) comprises an LED light.

4. The device of claim 1, wherein it additionally comprises a UV-protection housing to enclose the DLP source (2), the resin tank (8), the sample holder, the XYZ-stage module (7), the motorized nosepiece (4), the guiding optics (3), the imaging module (5) and the illumination module (6).

5. The device of claim 1, wherein the guiding optics (3) comprise a shutter, a beam expander and one or more lenses placed between the 2PP source (1) and the sample holder, and a digital mirror and a lens, placed between the DLP source (2) and the sample holder.

6. The device of claim 1, where the guiding optics (3) additionally comprise galvometric mirrors (9) placed between the 2PP source (1) and the motorized nosepiece (4).

7. The device according to claim 1, where the guiding optics (3) additionally comprise a digital mirror device (10) and a π shaper (11) placed between the 2PP source (1) and the motorized nosepiece (4).
